# EUROPÄISCHE PATENTSCHRIFT

(11) **EP 1 502 054 B1**
(45) Veröffentlichungstag und Bekanntmachung des Hinweises auf die Patenterteilung: **12.09.2007**
(21) Anmeldenummer: 03747427.7
(22) Anmeldetag: 29.04.2003
(51) Int. Cl.: F16M 11/06, F16D 65/26

(54) **DREHLAGEREINHEIT MIT BREMSEINRICHTUNG**
PIVOT BEARING UNIT COMPRISING A BRAKING DEVICE
UNITE COUSSINET DE PIVOTEMENT EQUIPEE D'UN DISPOSITIF DE FREINAGE

(30) Priorität: 29.04.2002 DE 10219182
(43) Veröffentlichungstag der Anmeldung: 02.02.2005
(73) Patentinhaber: Wella Aktiengesellschaft, 64274 Darmstadt (DE)
(72) Erfinder: LUX, Erhard, 36151 Burghaun (DE); KNAPPE, Stefan, 36151 Burghaun (DE)
(86) Internationale Anmeldenummer: PCT/EP2003/004452
(87) Internationale Veröffentlichungsnummer: WO 2003/093720

(56) Entgegenhaltungen:
- EP-A- 0 614 036
- WO-A-91/08418
- DE-A- 3 100 819
- US-A- 3 163 274
- US-A- 5 288 277

## Beschreibung

Die Erfindung betrifft eine Drehlagereinheit nach der Gattung des Oberbegriffs des Anspruchs 1 wie sie aus US 5 288 277 oder DE 3100819 bekannt ist.

Ein weiteres Stativ ist aus der DE4306805C1 bekannt.

Axiale Drehlagereinheiten mit einer Bremseinrichtung für ein Stativ dienen beispielsweise zur horizontalen Schwenkbewegung von medizintechnischen Deckenversorgungseinheiten. Die medizintechnische Deckenversorgungseinheit dient zum Transport medizintechnischer Geräte horizontal sowie vertikal in einem Raum.

Der Erfindung liegt die Aufgabe zu Grunde, eine gattungsgleiche Drehlagereinheit zu schaffen, die einen einfachen Aufbau und eine zuverlässigere Funktionsweise aufweist. Außerdem sollen Verschleißteile (Bremsklötze und Bremsschlauch) ohne Demontage von Versorgungsleitungen einfach ersetzt werden können.

Diese Aufgabe wird durch die Merkmale des kennzeichnenden Teils des Anspruchs 1 gelöst.

Die Erfindung wird an Hand von einem Ausführungsbeispiel näher beschrieben.

Es zeigt:
- Fig. 1: in einer Axialschnittansicht eine Drehlagereinheit in einem Schnitt I-I nach der Fig. 2;
- Fig. 2: in einer Schnittansicht die Drehlagereinheit nach Schnitt II-II der Fig. 1;
- Fig. 3: eine Detaildarstellung III nach der Fig. 1, aus der eine Bremseinrichtung in einem inaktiven Zustand näher hervorgeht;
- Fig. 4: in einer Seitenansicht die Drehlagereinheit nach der Fig. 1;
- Fig. 5: die Detaildarstellung III nach der Fig. 3, die Bremseinrichtung jedoch im aktivierten Zustand, und
- Fig. 6: in einer Seitenansicht ein Anwendungsbeispiel mit einem Deckenstativ.

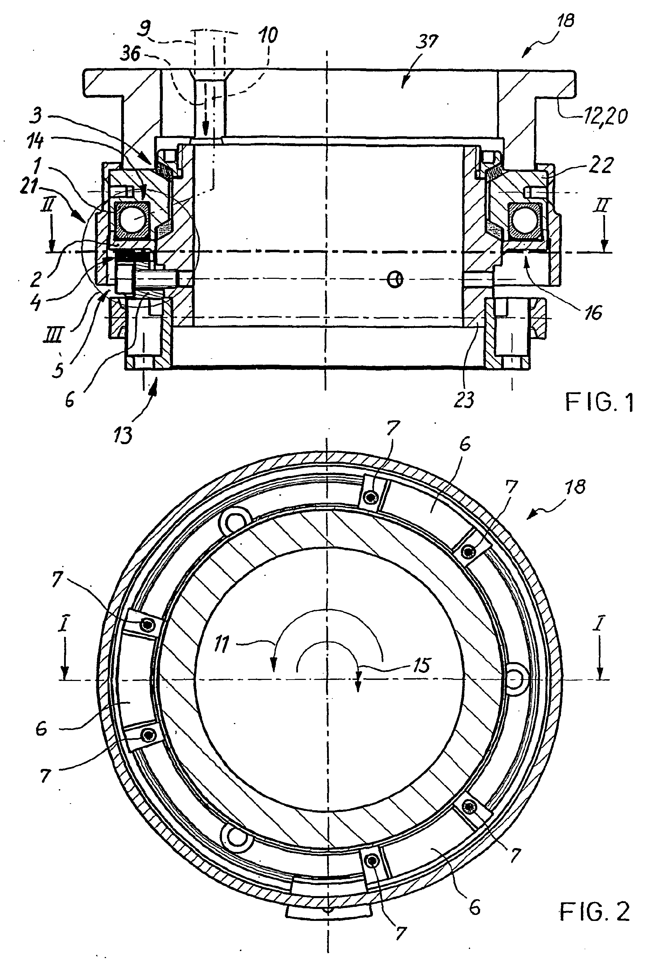

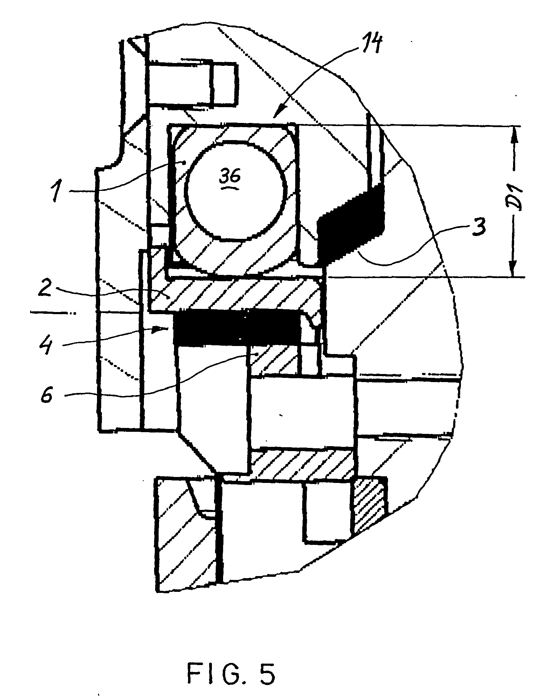

Die Fig. 1 zeigt eine Drehlagereinheit 18 mit einem ersten und einem zweiten Lagerteil 22, 23, die relativ zueinander verdrehbar ausgebildet sind. Zum Bremsen beziehungsweise zum Fixieren eines eingestellten Drehwinkels der beiden Lagerteile 22,23 miteinander ist die Drehlagereinheit 18 mit einer pneumatischen Bremseinrichtung 21 versehen, die über eine Druckluftzuleitung 10 mittels Druckluft 36 aktivierbar ist. Die Bremseinrichtung 21 ist mit einem in einer Lagerschale 14 eingebetteten Bremsschlauch 1 im ersten Lagerteil 22 versehen, wobei der Bremsschlauch 1 durch Beaufschlagung mit Druckluft 36 sich mit einer Bewegung 8 in Richtung einer freien Seite 16 ausdehnt (Fig. 5) und über einen axial beweglichen Schaltring 2 eine Kraft 17 auf mindestens einen Bremsklotz 6 des zweiten Lagerteils 23 ausübt zum Übertragen eines Bremsmoments 15 zwischen dem ersten und dem zweiten Lagerteil 22,23. Der Bremsklotz 6 ist fest am Lagertopf 13 angeschraubt. Der Schaltring 2 drückt sich, nachdem Druckluft 36 in den Bremsschlauch 1 geschaltet wurde, auf dem Bremsbelag 4, der auf dem aus Aluminium bestehenden Bremsklotz 6 aufgeklebt ist. Der Bremsbelag 4 besteht aus einem Kunststoff, beispielsweise wie er von der Firma Jurid lieferbar ist.

Als Bremsschlauch 1 ist ein abgelängter Gummischlauch vorgesehen, wobei ein erstes Ende mittels eines Stopfens abgedichtet und ein zweites Ende mit einem eingeklebten Anschlussventil (nicht dargestellt) für die Druckluftzuleitung 10 versehen ist. Dieser Bremsschlauch 1 wird wie ein Ring in die Lagerschale 14 eingelegt. Die Druckluftzuleitung 10 wird durch die Lagerschale 14 zur Deckenmontage geführt. Dadurch, dass der Bremsschlauch 1 eine rechteckige Außenform aufweist, ist einerseits ein guter Sitz in der dazu komplementären Lagerschale 14 und andererseits eine flächigere Kraftübertragung auf den Schaltring 2 gegeben.

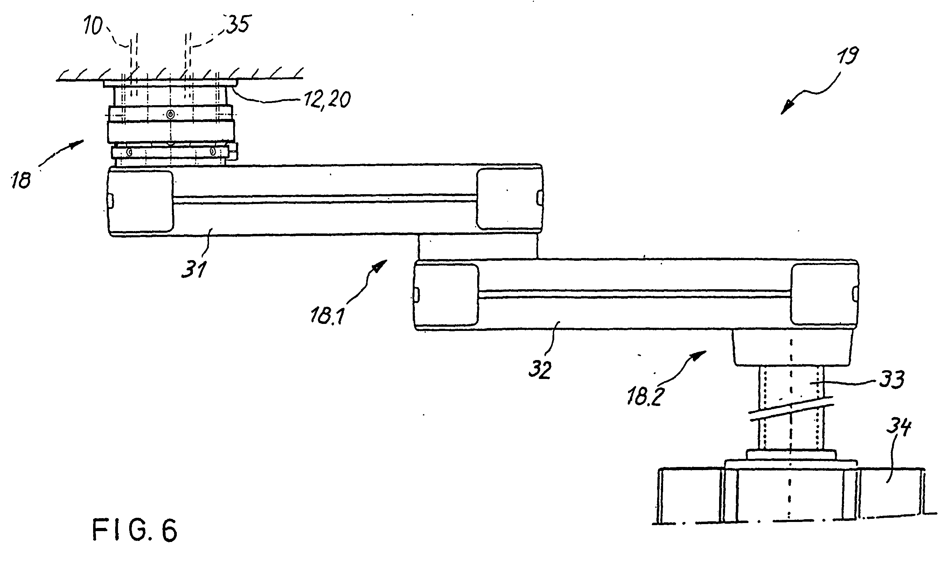

Der Lagertopf 13 wird zur Montage bzw. Befestigung eines zu schwenkenden Stativarms 31,32 oder einer Stativsäule 33 benutzt. Zum Durchführen von Leitungen (Druckluftzuleitungen 10, elektrischen Leitungen 35) weist das erste Lagerteil 22 eine zentrische Öffnung 37 auf, wobei das zweite Lagerteil 23 als ein Lagertopf 13 ausgestaltet ist. Die Montage erfolgt mittels üblicher Verschraubungen. Der Kraftfluss erfolgt von der ringförmigen Befestigungseinrichtung 12 über die Schrägnadellager 3 zu dem Lagertopf 13. Zur Sicherstellung, dass die Stativarme 31,32 sich nicht unkontrolliert horizontal bewegen können, ist jeweils eine Bremseinrichtung 21 eingebaut. Eine nachträgliche Montage bzw. Demontage von Komponenten der Bremseinrichtung 21 ist jederzeit möglich ohne Demontage eines medizintechnischen Geräts 34 (Fig. 6). Dabei entfällt das sonst übliche Entfernen von Gasleitungen 9 oder Druckluftzuleitungen 10 und elektrischen Zuleitungen 35.

Dem Bremsschlauch 1 wird mittels einer Druckluftzuleitung 10 aus Kunststoff Druckluft 36 eingeführt. Dies erfolgt nach Betätigung eines Pneumatikventils (nicht dargestellt) mit beispielsweise einer Handbetätigung, wobei der Bremsschlauch 1 aufgepumpt wird und sich dabei ausdehnt. Dabei bewegt der Bremsschlauch 1 den Schaltring 2 mittels einer Linearbewegung 8 nach unten. Bedingt durch eine formschlüssige Anbindung an die Lagerschale 14 ist eine radiale Bewegung 11 des Schaltringes 2 während der linearen Bewegung 8 unmöglich.

Die lineare Bewegung 8 des Schaltrings 2 wird durch die Bremsklötze 6 begrenzt. Der Schaltring 2 sitzt auf den Bremsbelägen 4 auf und erzeugt ein Bremsmoment 15. Die Einstellung des Bremsmomentes 15 erfolgt mittels Gewindestiften 7, durch die der Bremsklotz 6 durch eine Linearbewegung 8 angehoben wird und mit einer Schraubverbindung 5 fixiert ist. Durch die Anzahl der Bremsklötze 6 von mehr als drei kann ebenfalls Einfluss auf das Bremsmoment 15 genommen werden.

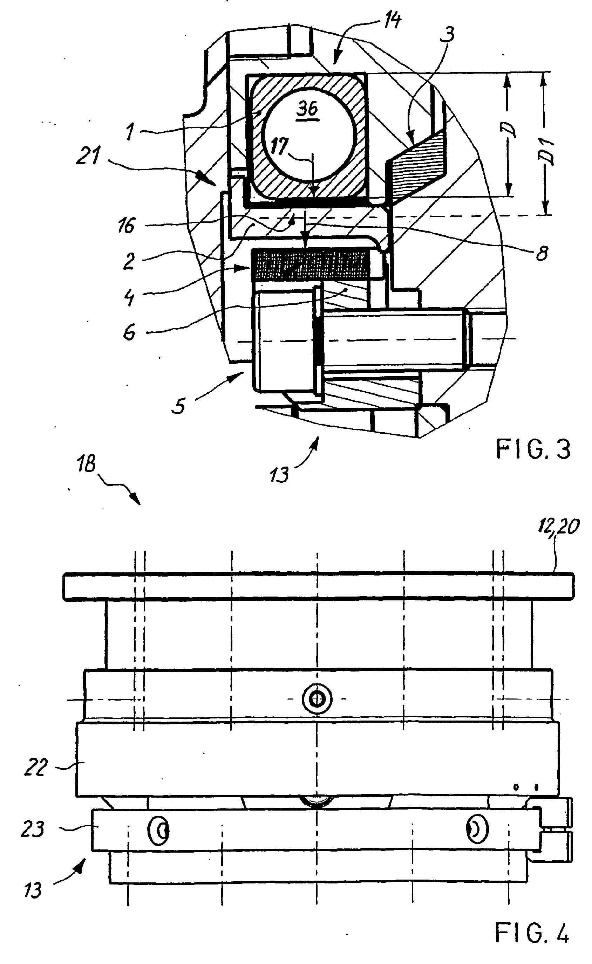

Durch Abblasen der Druckluft 36 durch Betätigen eines Pneumatikventils (nicht dargestellt) wird der Bremsschlauch 1,10 entlüftet. Diesen Zustand zeigt die Fig. 1 bzw. 3. Der Schaltring 2 bewegt sich linear nach oben. Der Druck auf die Bremsklötze 6 wird aufgehoben und somit die Bremseinrichtung 21 gelüftet und deaktiviert.

Eine permanente Bremsung mittels Friktion ist ohne Umbau möglich. Dies kommt zum Tragen, wenn die Druckluftversorgung bauseitig nicht gegeben ist. Hierfür werden die Bremsklötze 6 mittels Gewindestiften 7 angehoben und durch eine Schraubverbindung 5 fixiert. Der Schaltring 2 hat jetzt dauerhaft Kontakt mit dem Bremsbelag 4 des Bremsklotzes 6, wodurch ein Friktionsbremsmoment 15 erzeugt wird. Durch diese Konstruktion wird ein Reibungsverschleiß des Bremsschlauchs 1 vermieden.

Verschleißteile, wie Bremsschlauch 1 und Bremsklötze 6 können vorteilhaft ohne Demontage der Versorgungsleitungen (Strom- und Gasversorgung) ersetzt werden.

Fig. 2 zeigt in einer Schnittansicht die Drehlagereinheit 18 nach Schnitt II-II der Fig. 1.

Fig. 3 zeigt eine Detaildarstellung III nach der Fig. 1, aus der die Bremseinrichtung 21 in einem inaktiven Zustand näher hervorgeht. Der Bremsschlauch 1 ist dreiseitig eingebettet und kann sich somit ausschließlich in Richtung der freien Seite 16 ausdehnen (Fig. 5). Dies hat zur Folge, dass ein erster Abstand D sich auf einen zweiten Abstand D1 vergrößert und somit eine Kraft 17 auf den Schaltring 2 ausübt. Dabei wirkt der Bremsschlauch 1 wie ein pneumatischer Kurzhubzylinder.

Fig. 4 zeigt in einer Seitenansicht die Drehlagereinheit 18 nach der Fig. 1.

Fig. 5 zeigt die Detaildarstellung III nach der Fig. 3, die Bremseinrichtung 21 jedoch im aktivierten Zustand durch den mittels der Druckluft 36 ausgedehnten Bremsschlauch 1.

Nach der Fig. 6 ist die Drehlagereinheit 18 für ein Stativ 19, insbesondere für ein Deckenstativ 19 vorgesehen, wobei als Befestigungseinrichtung 12 für eine Deckenbefestigung eine Flanschplatte 20 vorgesehen ist. Das Deckenstativ 19 weist einen ersten und einen zweite Stativarm 31,32 auf mit jeweils einer weiteren Drehlagereinheit 18.1 bzw. 18.2, die zum Teil innerhalb der Stativarme 31,32 untergebracht sind. Durch eine gestrichelt dargestellte Druckluftzuleitung 10 wird Druckluft 36 (5 bar) in den jeweiligen Bremsschlauch 1 durch Verteilung eingeleitet oder es werden für alle drei Bremsschläuche 1 der Drehlagereinheiten 18, 18.1, 18.2 separate Druckluftzuleitungen 10 vorgesehen.

### Bezugsziffernliste:

- 1: Bremsschlauch
- 2: Schaltring
- 3: Schrägnadellager
- 4: Bremsbelag
- 5: Schraubverbindung
- 6: Bremsklotz
- 7: Gewindestift
- 8: Linearbewegung
- 9: Kunststoffschlauch
- 10: Druckluftzuleitung
- 11: Radiale Bewegung
- 12: Befestigungseinrichtung
- 13: Lagertopf
- 14: Lagerschale
- 15: Bremsmoment
- 16: Freie Seite
- 17: Kraft
- 18: Drehlagereinheit
- 19: Deckenstativ
- 20: Flanschplatte
- 21: Bremseinrichtung
- 22: Erstes Lagerteil
- 23: Zweites Lagerteil
- 31: Erster Stativarm
- 32: Zweiter Stativarm
- 33: Stativsäule
- 34: Gerät
- 35: Elektrische Leitung
- 36: Druckluft
- 37: Zentrische Öffnung
- D: Erster Abstand
- D1: Zweiter Abstand

## Patentansprüche

1. Drehlagereinheit (18) mit einer pneumatischen Bremseinrichtung (21) mit einem ersten und einem zweiten Lagerteil (22,23), die relativ zueinander verdrehbar ausgebildet sind, wobei die Bremseinrichtung (21) **dadurch gekennzeichnet, dass** und über eine Druckluftzuleitung (10) mittels Druckluft (36) aktivierbar ist, wobei die Bremseinrichtung (21) mit dem in einer Lagerschale (14) eingebetteten Bremsschlauch (1) im ersten Lagerteil (22) versehen ist, wobei der Bremsschlauch (1) durch Beaufschlagung mit Druckluft (36) sich mit einer Bewegung (8) in Richtung einer freien Seite (16) ausdehnt, einen Bremsschlauch (1) mit einem rechteckigen Querschnitt aufweist der Bremsschlauch (1) über einen axial beweglichen Schaltring (2) eine Kraft (17) auf mindestens einen Bremsklotz (6) des zweiten Lagerteils (23) ausübt zum Übertragen eines Bremsmoments (15) zwischen dem ersten und dem zweiten Lagerteil (22,23).

2. Drehlagereinheit nach Anspruch 1, **dadurch gekennzeichnet, dass** der mindestens eine Bremsklotz (6) mit einem Bremsbelag (4) versehen ist.

3. Drehlagereinheit nach Anspruch 1, **dadurch gekennzeichnet, dass** das erste Lagerteil (22) eine zentrische Öffnung (37) aufweist, und dass das zweite Lagerteil (23) als ein Lagertopf (13) ausgestaltet ist,

4. Drehlagereinheit nach Anspruch 1, **dadurch gekennzeichnet, dass** die Drehlagereinheit (18) für ein Stativ (19), insbesondere für ein Deckenstativ (19) vorgesehen ist, wobei eine Befestigungseinrichtung (12) mit einer Flanschplatte (20) vorgesehen ist.

## Claims

1. Pivot bearing unit (18) with a pneumatic brake device (21) having a first and a second bearing part (22, 23) which are designed so as to be rotatable relative to one another, wherein the brake device (21) has a brake hose (1) with a rectangular cross section and can be activated by means of compressed air (36) via a compressed air supply line (10), wherein the brake device (21) is provided with the brake hose (1), which is embedded in a bearing shell (14), in the first bearing part (22), and wherein the brake hose (1) expands with a movement (8) in the direction of a free side (16) when acted upon with compressed air (36), **characterized in that** the brake hose (1) exerts a force (17), via an axially moveable shift ring (2), on at least one brake pad (6) of the second bearing part (23) in order to transmit a braking torque (15) between the first and the second bearing part (22, 23).

2. Pivot bearing unit according to Claim 1, **characterized in that** the at least one brake pad (6) is provided with a brake lining (4).

3. Pivot bearing unit according to Claim 1, **characterized in that** the first bearing part (22) has a central opening (37) and **in that** the second bearing part (23) is designed as a bearing pot (13).

4. Pivot bearing unit according to Claim 1, **characterized in that** the pivot bearing unit (18) is provided for a support (19), in particular for a ceiling mount (19), with a fastening device (12) having a flange plate (20) being provided.

## Revendications

1. Unité (18) de palier rotatif dotée d'un dispositif pneumatique de freinage (21), qui présente une première et une deuxième pièce de palier (22, 23) qui sont configurées de façon à pouvoir tourner l'une par rapport à l'autre, le dispositif de freinage (21) présentant un tuyau flexible de frein (1) de section transversale rectangulaire et pouvant être activé par de l'air comprimé (36) apporté par un conduit (10) d'air comprimé, le dispositif de freinage (21) étant doté du tuyau flexible de frein (1) incorporé dans le coussinet (14) de la première pièce de palier (22) et le tuyau flexible de frein (1) s'allongeant en se déplaçant (8) en direction d'un côté libre (16) lorsqu'il est sollicité par de l'air sous pression (36), **caractérisé en ce que** le tuyau flexible de frein (1) exerce par l'intermédiaire d'une bague de raccordement (2) déplaçable axialement une force (17) sur au moins un bloc de frein (:6) de la deuxième pièce de palier (23), pour transférer un couple de freinage (15) de la première à la deuxième pièce de palier (22, 23).

2. Unité de palier rotatif selon la revendication 1, **caractérisée en ce que** ledit au moins un bloc de frein (6) est doté d'une garniture de frein (4).

3. Unité de palier rotatif selon la revendication 1, **caractérisée en ce que** la première pièce de palier (22) présente une ouverture centrale (37) et **en ce que** la deuxième pièce de palier (23) est configurée comme coupelle de palier (13).

4. Unité de palier rotatif selon la revendication 1, **caractérisée en ce que** l'unité de palier rotatif (18) est prévue pour un support (19) et en particulier pour un support de plafond (19), le dispositif de fixation (12) étant doté d'une plaque de bride (20).
